# EUROPEAN PATENT APPLICATION

(11) **EP 1 202 038 A1**
(43) Date of publication of application: **02.05.2002**
(21) Application number: 01118179.9
(22) Date of filing: 27.07.2001
(51) Int. Cl.: G01M 11/00

(54) **Determination of optical properties of a device under test in transmission and in reflection**

(71) Applicant: Agilent Technologies, Inc. (a Delaware corporation), Palo Alto, CA 94303 (US)
(72) Inventor: Ziegler, Patrick, 71034 Boeblingen (DE); Stolte, Ralf, 21147 Hamburg (DE)
(74) Representative: Barth, Daniel

(57) **Abstract**

The present invention relates determination of optical properties, e.g. polarization dependent loss (PDL), polarization mode dispersion (PMD), differential group delay (DGD), insertion loss, return loss and/or chromatic dispersion (CD), of a device under test (DUT) in transmission and in reflection of an optical beam. The invention is disclosing an element that is at least partly transmissive and at least partly reflective.

## Description

### BACKGROUND OF THE INVENTION

The present invention relates to determination of optical properties, e.g. polarization dependent loss (PDL), polarization mode dispersion (PMD), differential group delay (DGD), insertion loss, return loss and/or chromatic dispersion (CD), of a device under test (DUT) in transmission and in reflection of an optical beam.

Measurement setups for the above-mentioned purpose shall be as easy to handle as possible and shall reveal all optical properties of the DUT as fast as possible and with as little handling as possible. This means that the DUT should be fully characterized to all parameters required when it is once connected to the measurement setup. For a full characterization it is required to measure all parameters both in transmission and in reflection as fast as possible.

From the disclosure of work of Sandel et al (David Sandel, Reinhold Noé, "Optical Network Analyzer applied for Fiber Bragg Grating Characterization", ECOC 97, 22-25 September 1997, Conference Publication No. 448, © IEE, 1997, pp. 186-189; David Sandel et al, "Optical Network Analysis and Longitudinal Structure Characterization of Fiber Bragg Grating", Journal of Lightwave Technology, Vol. 16, No. 12, December 1998, pp. 2435-2442) it is known a method for polarization-resolved optical fiber Bragg grating characterization. However, in these disclosures only the reflection of the DUT is measured.

From a work of Froggatt at al (Froggatt et al, "Full Complex Transmission and Reflection Characterization of a Bragg Grating in a Single Laser Sweep",) it is known a measurement setup to measure the group delay of a DUT in transmission and in reflection in both directions. However, with the disclosed measurement setup it is not possible to measure PMD or PDL. Moreover, the measurement setup disclosed in this article causes problems because the detectors used to detect the signals of reflection and transmission receive the signals of both directions simultaneously, i.e. the reflected signal of one direction is superimposed with the transmitted signal of the other direction and the transmitted signal of one direction is superimposed with the reflected signal of the other direction. Therefore, complex measures are necessary to distinct between these signals without really knowing all impacts of this superposition of signals.

### SUMMARY OF THE INVENTION

Therefore, it is an object of the invention to provide improved determination of optical properties of a DUT in one direction in transmission and in reflection of an optical beam.

The object is solved by the independent claims.

An advantage of the present invention is the provision of a fast way to convert a measurement setup of the above-mentioned art for measuring in transmission into a measurement setup which is able to measure the DUT in one direction in transmission and in reflection, simultaneously. In a preferred embodiment of the invention the inventive element comprises a semi-transparent mirror. This embodiment is easy to fabricate, easy to handle and cheap in production costs.

In a further preferred embodiment of the invention the element has a known proportion of transmission and reflection, more preferred also known optical properties, e.g. PDL, PMD, DGD, insertion loss, return loss, CD. It is preferred to have an element with substantially no PMD, DGD, insertion loss, return loss, PDL, and CD in the relevant wavelength range.

It is further preferred that the element is prepared in such a way that the optical properties can be adjusted. This embodiment guarantees more flexibility when using the inventive element.

In another preferred embodiment of the invention the element comprises a first beam splitter or coupler in an initial path of the beam for coupling out at least a part of the beam into a first path, an optical guide for guiding the part of the beam partly back into the initial path in reverse direction, the guide preferably comprising a second beam splitter or coupler in the first path for coupling the part of the beam back into the initial path. This embodiment realizes the invention without the necessity of using a semi-transparent mirror.

In another preferred embodiment of the invention the element comprises a first beam splitter or coupler in an initial part of the beam for coupling out at least part of the beam into a first path, a mirror in the first path for reflecting back the part of the beam to the first beam splitter so that the first beam splitter partly guides the part back into the initial path in reverse direction and partly into a second path guiding the reflected signal in the initial direction.

Other preferred embodiments are shown by the dependent claims.

It is clear that the invention can be partly or entirely embodied or supported by one or more suitable software programs, which can be stored on or otherwise provided by any kind of data carrier, and which might be executed in or by any suitable data processing unit.

### BRIEF DESCRIPTION OF THE DRAWINGS

Other objects and many of the attendant advantages of the present invention will be readily appreciated and become better understood by reference to the following detailed description when considering in connection with the accompanied drawings. The components in the drawings are not necessarily to scale, emphasis instead being placed upon clearly illustrating the principles of the present invention. Features that are substantially or functionally equal or similar will be referred to with the same reference sign(s).
- Fig. 1: shows a principle of an embodiment of the inventive;
- Fig.2: shows a first embodiment of the element of the present inventions;
- Fig.3: shows a second embodiment of the element of the present inventions;
- Fig. 4: shows a third embodiment of the element of the present invention,
- Fig. 5: shows a first measurement setup according to the present invention; and
- Fig. 6: shows a second measurement setup according to the present invention.

### DETAILED DESCRIPTION OF THE INVENTION

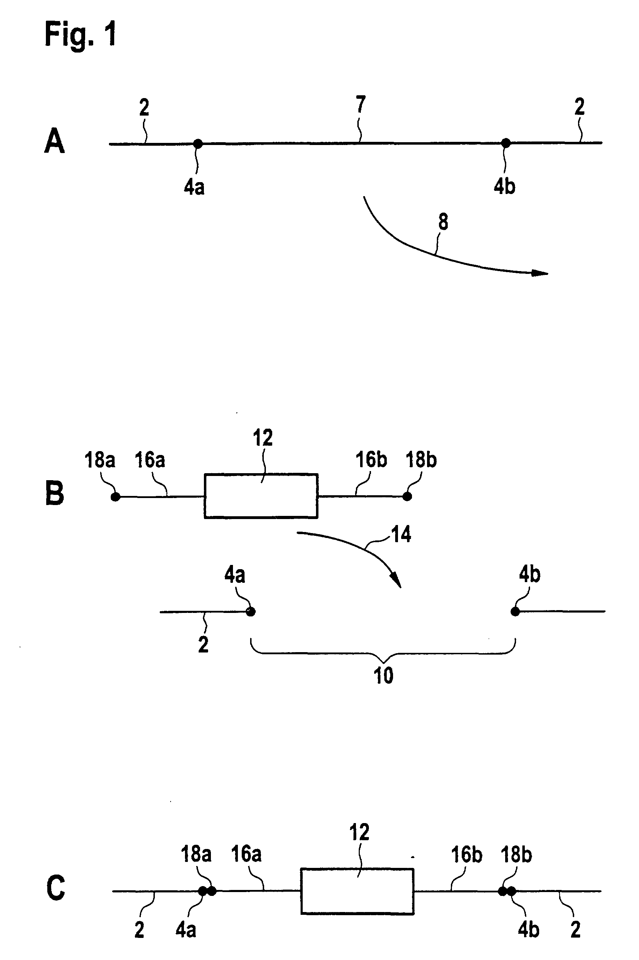

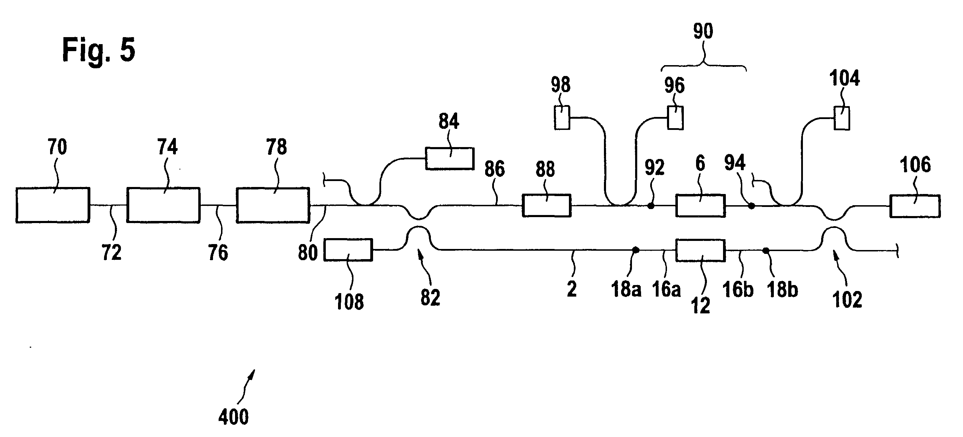

Referring now in greater detail to the drawings, Fig. 1 shows schematically a principle of an embodiment of the inventive method. In step A of Fig. 1 it is shown the reference arm 2 of a measurement setup 400 (see Fig. 5) for determination of optical properties of a DUT 6 in transmission and in reflection in one direction. Such a measurement setup 400 can be calibrated and/or verified by a calibration and/or verification element disclosed in a parallel patent application of the applicant of the same day. Therefore, the description of the measurement setup calibration and/or verification given in the parallel application is incorporated herein by reference.

The reference arm 2 has two connectors 4a and 4b. Between the two connectors 4a and 4b a patch-cord is inserted. By releasing the connection at the connectors 4a and 4b (indicated by the arrow 8) it is possible to disconnect the patch-cord 7 from the reference arm 2. This, as shown in step B of Fig. 1, opens a gap 10 between the connectors 4a and 4b. This makes it possible to insert an inventive element 12 into the gap 10 (indicated by arrow 14). For this purpose the element 12 is prepared with two short patch-cords 16a and 16b which patch-cords have connectors 18a and 18b which connectors can be connected to the connectors 4a and 4b of the reference arm 2, respectively. As shown in step C of Fig. 1, as a result the inventive element 12 is inserted in the reference arm 2 and has replaced the patch-cord 7.

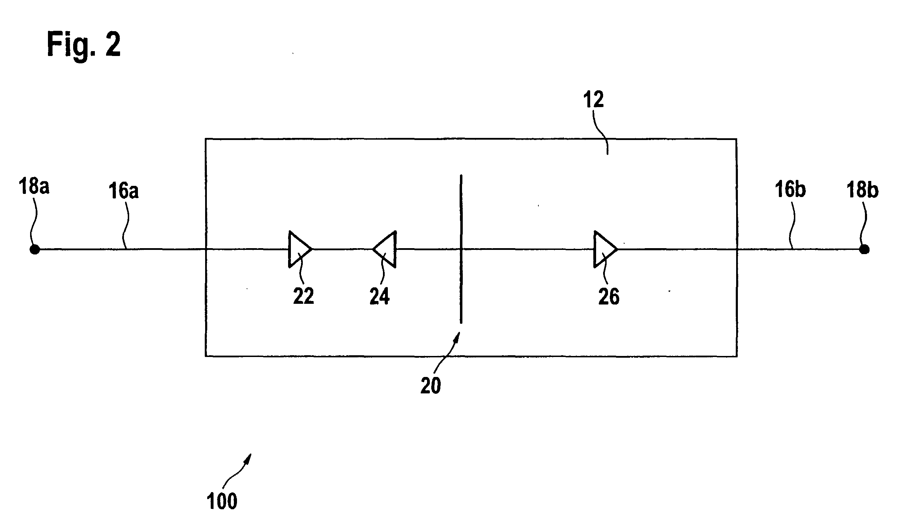

Fig. 2 shows a first embodiment 100 of the inventive element 12. In embodiment 100 the inventive element 12, comprises a semi-transparent mirror 20. The semi-transparent mirror 20 reflects 50% of light as indicated by a triangle 22 and guided by the patch-cord 16a to the mirror 20 back into the patch-cord 16a as indicated by 24 and lets 50% of the light 22 travel through the mirror 20 as indicated by triangle 26 which light travels along the patch-cord 16b to the connector 18b. Therefore, the element according to Fig. 2 provides transmission and reflection of the incoming light 22. However, different ratios of transmission and reflection can be used.

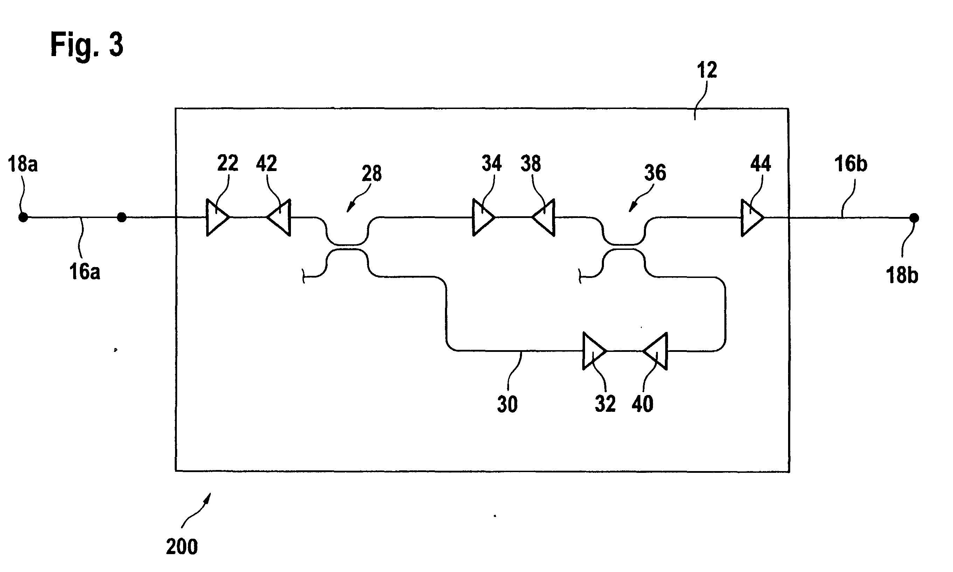

Fig. 3 shows a second embodiment 200 of the inventive element 12 of the present invention. Element 12 of embodiment 200 comprises a first coupler 28, which is preferably a 3dB coupler. However, other couplers, as 10dB couplers, can be used, also. Coupler 28 lies in the initial path provided by patch-cord 16a of the incoming light 22. The coupler 28 couples out 50% of the light 22 into a first path 30, the part coupled out being indicated by a triangle 32. The other 50% part as indicated by triangle 34 travels along the initial path 16a. Furthermore, element 12 comprises a second beam splitter 36 which couples part 32 partly back into the initial path 16a in reverse direction as indicated by triangle 38. Additionally, the second coupler 36 couples the light 34 into the first path 30 as indicated by triangle 40. Light 40 is partly coupled back into the initial path 16a in reverse direction with the first coupler 28 as indicated by triangle 42. The part of the light 34 not coupled out of the initial path 16a by the second coupler 36 travels along the patch-cord 16b to the connector 18b as indicated by triangle 44. Therefore, the element 12 in the embodiment 200 of Fig. 3 provides a part 44 of the incoming light 22 in transmission at the connector 18b and a part 42 of the incoming light 22 in reflection at the connector 18a.

Furthermore, by adjusting the couplers 28 and 36, e.g. by using 10dB couplers or other couplers, it is possible to adjust the ratio of reflected light 42 to transmitted light 44.

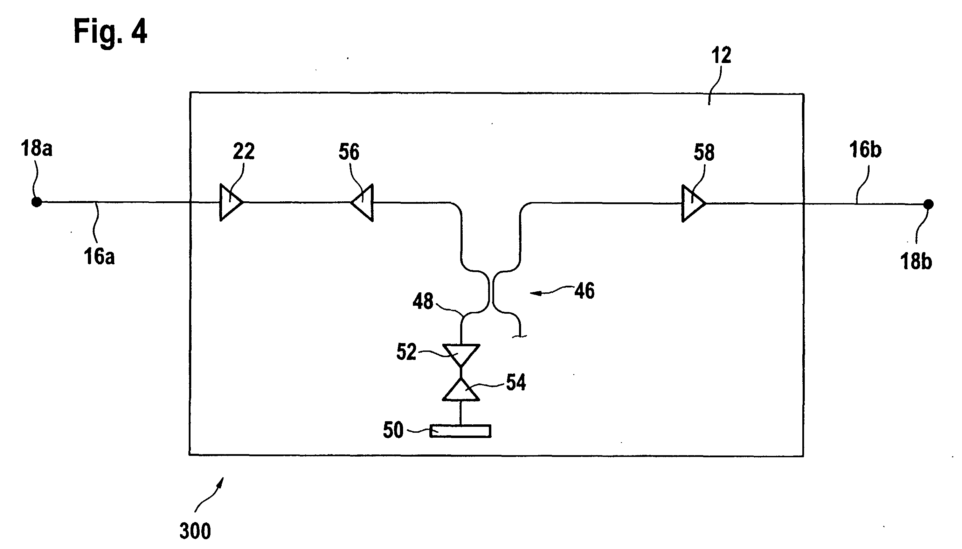

Fig. 4 shows a third embodiment 300 of the inventive element 12 of the present invention. In embodiment 300 the incoming light 22 is partly coupled out by a coupler 46 into a first path 48 as indicated by triangle 52. At the end of the first path 48 there is provided a mirror 50. Mirror 50 reflects the light 52 in total as indicated by triangle 54. Subsequently, coupler 46 couples the reflected light 54 into the initial path 16a in reverse direction as indicated by triangle 56 and into the patch-cord 16b in a direction to the connector 18b as indicated by triangle 58. Therefore, the element 12 according to the embodiment 300 of Fig. 4 provides a part 58 of the incoming light 22 in transmission at the connector 18b and a part 56 of the incoming light 22 in reflection at the connector 18a.

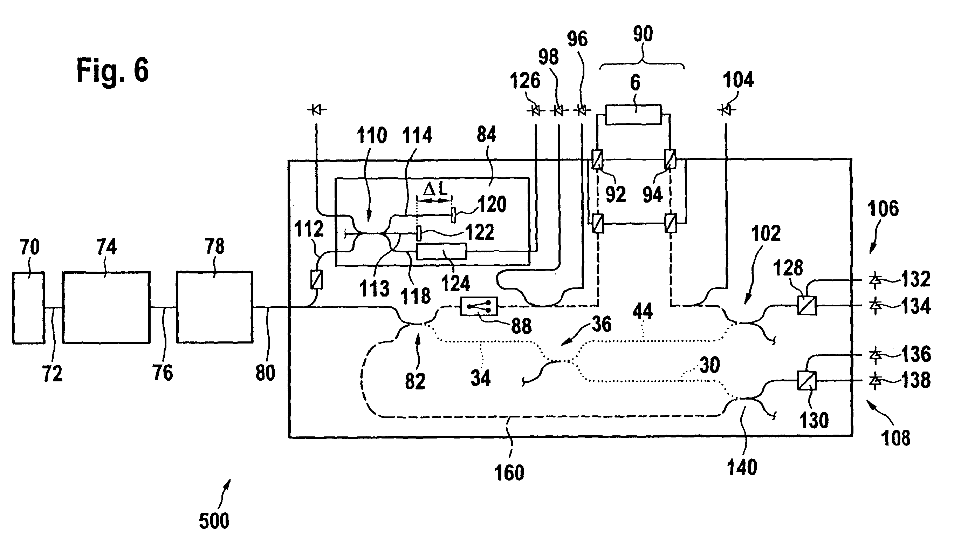

Fig. 5 shows a first embodiment 400 of a measurement setup according to the present invention. Measurement setup 400 contains a tunable light source 70 that provides a coherent laser beam 72 to a polarization controller 74 (which can be a Hewlett-Packard HP 8169A). The polarization controller 74 provides a polarization controlled coherent light beam 76 to an isolator 78. Optically connected with the isolator 78 and receiving a coherent light beam 80 from the isolator 78 is a third beam splitter 82 that is a 3dB coupler. Also optically connected with the isolator 78 and receiving the optical beam 80 is a wavelength reference unit 84 (see also Fig. 6) to detect the wavelength of the beam 80.

Connected to the coupler 82 is a reference arm 2 and a measurement arm 86. In the measurement arm there is provided a switch 88 to cut the measurement arm 86 for calibration purposes. Additionally, the measurement arm 86 contains a seat 90 to receive the DUT 6. The seat 90 has two connectors 92 and 94 to enable the DUT 6 to be connected to the measurement arm 86.

Between the third coupler 82 and the seat 90 there is provided a fifth power 96 for measuring the signal strength of the beam 80 split by the coupler 82 into the measurement arm 86. Additionally, there is a provided a sixth detector 98 for measuring the signal strength of the light being reflected by the DUT 6.

Furthermore, the measurement arm 86 is connected to a fourth beam splitter 102 that is a 3dB coupler. Between the seat 90 and the fourth beam splitter 102 there is provided a seventh power detector for measuring the signal strength of the light transmitted through the DUT 6.

Connected to the coupler 102 is a polarization diversity receiver 106 to detect a superimposed signal being the superposition of the transmitted signal by the DUT 6 and a reference signal coupled in by the fourth coupler 102 from the reference arm 2. The reference signal is coupled into the reference arm 2 by the third coupler 82.

Connected to the third coupler 82 is also a polarization diversity receiver 108. This polarization diversity receiver detects the superimposed signal of the reflected signal from the DUT 6 coupled in by the coupler 82 from the reference arm and the reflected reference signal coupled in from the reference arm coming from the element 12.

For further details it is referred to the European Patent Application 00125089.3 of the applicant the disclosure of which is incorporated herein by reference.

Fig. 6 shows a second embodiment 500 of a measurement setup according to the present invention. Fig. 6 shows further details of the wavelength reference unit 84. The wavelength reference unit 84 contains a six port coupler 110 which coupler 110 splits a part 112 coupled out from the beam 80 into three beams 114, 116 and 118. Beams 114 and 116 are directed onto Faraday mirrors 120 and 122. The Faraday mirror 120 can be shifted to change the length of the path 114. Furthermore, the wavelength reference unit 84 contains a gas cell 124 connected with a eighth power detector 126. The gas in the gas cell 124 has a known absorption spectrum. With the help of the detector 126 and the known absorption spectrum of the gas in the gas cell 124 it is possible to determine the wavelength of the beam 80 very precisely.

Additionally, embodiment 500 shows the polarization diversity receivers 106 and 108 in detail. Both have polarization beam splitters 128 and 130 that are connected to first 132, second 134, third 136 and fourth 138 power detectors.

Contrary to the embodiment 400 of Fig. 5 embodiment 500 of Fig. 6 has the element 12 according to embodiment 200 of Fig. 3 not connected as shown in embodiment 200 of Fig. 3. In embodiment 500 of Fig. 6 the guide 30 is not coupled into the reference arm directly as shown in Fig. 3. In embodiment 500 the guide 30 is coupled with a coupler 140 to superimpose the reference signal guided by guide 30 with the reflected signal of path 160 directly in front of the polarization diversity receiver 108. This advantageously avoids introduction of the reference signal 30 into the initial path 80.

## Claims

1. An element for adding a reference signal of reflection to a measurement setup (400, 500) for determination of optical properties of a device under test (6) in transmission and in reflection of an optical beam (22, 80),
the element (12) being at least partly transmissive and at least partly reflective.

2. The element of claim 1,
having a known proportion of transmission and reflection.

3. The element of any one of the claims 1 or 2,
having at least one known optical property, the optical property being at least one out of the group of PDL, PMD, DGD, insertion loss, return loss, CD, preferably having substantially no PMD, DGD, insertion loss, return loss, PDL and CD in the wavelength range of the optical beam (22, 80).

4. The element of claim 3,
comprising at least one sub-element (20, 28, 30, 36, 46, 48, 50) to adjust the at least one optical property.

5. The element of any one of the claims1-4,
comprising a semi-transparent mirror (20).

6. The element of any one of the claims 1-5,
comprising a first beam splitter or coupler (28) to be connected to an initial path (16a) of the beam (22, 80) for coupling out at least a part (32) of the beam (22, 80) into a first path (30), an optical guide (30, 36) for guiding the part (32) of the beam (22, 80) at least partly (38) back into the initial path (16a) in reverse direction.

7. The element of claim 6,
the guide (30, 36) comprising a second beam splitter or coupler (36) to be connected to the first path (30) and to the initial path (16a) for coupling the part (32) of the beam (22, 80) back into the initial path (16a).

8. The element of any one of the claims 1-7,
comprising a first beam splitter or coupler (46) to be connected to an initial path (16a) of the beam (22, 80) for coupling out at least a part (52) of the beam (22, 80) into a first path (48), a mirror (20) at the end of the first path (48) to reflect the part (54) of the beam (22, 80) back into the beam splitter or coupler (46) for coupling back a part (56) of the part (52) into the initial path (16a) in reverse direction and the other part (58) of the part (52) into a second path (16b) to provide part (58) of the beam (22, 80) in transmission.

9. A method for adding a reference signal of reflection to a measurement setup (400, 500) for determination of optical properties of a device under test (6) in transmission and in reflection of an optical beam (22, 80),
comprising the steps of:
- replacing a part (7) of a reference arm (2) of the measurement setup (400, 500) by an element (12) according to any one of the claims 1-8,
- performing a run of the measurement setup (400, 500) to gain data in transmission and in reflection,
- analyzing the data to determine at least one optical property of the DUT (6) in transmission and in reflection.

10. A software program or product, preferably stored on a data carrier, for executing the method of claim 9 when run on a data processing system such as a computer.

11. Measurement setup for determination of optical properties of a DUT (6) in transmission and in reflection, comprising:
A measurement arm (86) to receive the DUT (6)
a transmission detector (106) in optical contact to the measurement arm (86) to detect the signal transmitted by the measurement arm (86),
a reflection detector (108) in optical contact to the measurement arm (86) to detect the signal reflected by the measurement arm (86),
a reference arm (2) in optical contact to the transmission detector (106) to provide a reference signal to the transmission detector (106),
the reference arm (2) comprising an element (12) of any one of the claims (1-9) in optical contact to the reflection detector (108) to provide a reference signal to the reflection detector (108).

12. The setup of claim 11, further comprising:
A third beam splitter (82) in optical contact to the measurement arm (86) and the reference arm (2) to provide the measurement arm (86) and the reference arm (2) with a coherent light beam (80),
a fourth beam splitter (102) in optical contact to the measurement arm (86) and the reference arm (2) and the transmission detector (106) to superimpose the signal transmitted by the measurement arm (86) with the signal transmitted by the reference arm (2) and to provide the produced superimposed signal to the transmission detector (106).

13. The setup of any one of the claims 11 or 12,
The transmission detector (106) and/or the reflection detector (108) each comprising a polarization beam splitter and allocating first and second and third and fourth power detectors, respectively,
the respective power detectors being connected to an evaluation unit to evaluate the optical properties of the DUT (6) on the basis of the detected powers.

14. The setup of any one of the claims 11-13 further comprising:
A seat (90) for the DUT (6) in the measurement arm (86) between the third (82) and the fourth (102) beam splitter,
a fifth power detector (96) in optical contact with the third beam splitter (82), located between the third beam splitter (82) and the seat (90), for measuring the signal strength inputted into the DUT (6),
a sixth power detector (98) in optical contact to the seat (90), located between the seat (90) and the fourth beam splitter (102), for measuring the signal strength of the signal transmitted by the DUT (6).

15. The setup of claim 14, further comprising:
A seventh power detector (104)in optical contact with the seat (90), located between the third beam splitter (82) and the seat (90), for measuring the signal strength of the signal reflected by the DUT (6).
